# EUROPEAN PATENT SPECIFICATION

(11) **EP 3 259 059 B1**
(45) Date of publication and mention of the grant of the patent: **13.12.2023**
(21) Application number: 16708048.0
(22) Date of filing: 19.02.2016
(51) Int. Cl.: B01J 29/76, B01J 29/85, C01B 39/48, C01B 39/54, B01J 29/83, B01J 29/90, B01D 53/86, B01D 53/94, B01J 37/02, B01J 35/00

(54) **METHODS AND SYSTEMS COMPRISING BI-METAL MOLECULAR SIEVE CATALYSTS**
VERFAHREN UND VORRICHTUNG ENTHALTEND BIMETALL-MOLEKULARSIEBKATALYSATOREN
PROCÉDÉ ET INSTALLATION COMPRENANT UN CATALYSEURÀ À TAMIS MOLÉCULAIRE BIMÉTALLIQUE

(30) Priority: 20.02.2015 US 201562118837 P
(43) Date of publication of application: 27.12.2017
(73) Proprietor: Johnson Matthey Public Limited Company, London EC4A 4AB (GB)
(72) Inventor: CHEN, Hai-Ying, Conshohocken, Pennsylvania 19428 (US); RIVAS-CARDONA, Alejandra, Humble, Texas 77346 (US); FEDEYKO, Joseph Michael, Malvern, Pennsylvania 19355 (US)
(74) Representative: Bown, Mark Richard
(86) International application number: PCT/US2016/018568
(87) International publication number: WO 2016/134196

(56) References cited:
- EP-A1- 2 724 983
- WO-A1-2015/018815
- CN-A- 103 394 369
- JP-A- 2015 044 720
- JP-A- 2015 062 874
- US-A1- 2014 161 718
- US-A1- 2015 209 769
- US-B1- 6 199 372
- Donny Gasah ET AL: "SYNTHESIS AND CHARACTERIZATION OF Cu/Ni-Zeolite-A FOR THE DIRECT CONVERSION OF METHANE TO LIQUID HYDROCARBON Faculty of Chemical and Natural Resources Engineering", , 1 May 2008 (2008-05-01), XP055269045, Retrieved from the Internet: URL:http://umpir.ump.edu.my/518/1/Donny_Ga sah.pdf [retrieved on 2016-04-27]
- ALESSANDRO TURRINA ET AL: "Understanding the structure directing action of copper-polyamine complexes in the direct synthesis of Cu-SAPO-34 and Cu-SAPO-18 catalysts for the selective catalytic reduction of NO with NH3", MICROPOROUS AND MESOPOROUS MATERIALS., vol. 215, 1 October 2015 (2015-10-01), pages 154-167, XP055268586, US ISSN: 1387-1811, DOI: 10.1016/j.micromeso.2015.05.038
- WUSIRIKA R ET AL: "Extruded Zeolite Catalysts for Lean Exhaust Application", SAE TECHNICAL PAPER SERIES, SOCIETY OF AUTOMOTIVE ENGINEERS, WARRENDALE, PA, US, no. 2005-01-1118, 11 April 2005 (2005-04-11), pages 1-11, XP002561687, ISSN: 0148-7191
- MARTÍNEZ-FRANCO RAQUEL ET AL: "Direct synthesis design of Cu-SAPO-18, a very efficient catalyst for the SCR of NOx", JOURNAL OF CATALYSIS, ACADEMIC PRESS, DULUTH, MN, US, vol. 319, 6 September 2014 (2014-09-06), pages 36-43, XP029082389, ISSN: 0021-9517, DOI: 10.1016/J.JCAT.2014.08.005
- GARCIA R ET AL: "Nickel Amine Complexes as Structure-Directing Agents for Aluminophosphate Molecular Sieves: A New Route to Supported Nickel Catalysts", TOPICS IN CATALYSIS, KLUWER ACADEMIC PUBLISHERS-PLENUM PUBLISHERS, NE, vol. 24, no. 1-4, 1 October 2003 (2003-10-01), pages 115-124, XP019291976, ISSN: 1572-9028
- ASHOK KUMAR ET AL: "Impact of different forms of feed sulfur on small-pore Cu-zeolite SCR catalyst", CATALYSIS TODAY, vol. 231, 1 August 2014 (2014-08-01), pages 75-82, XP055269067, NL ISSN: 0920-5861, DOI: 10.1016/j.cattod.2013.12.038

## Description

### BACKGROUND

### Field of Invention:

The present invention relates to a method for treating combustion exhaust gas with molecular sieve catalysts, and a system containing said catalysts.

### Description of Related Art:

Small pore molecular sieves, such as zeolites and silicoaluminphosphates (SAPOs), with Cu²⁺ cations in extra-framework positions show excellent activity in the selective catalytic reduction (SCR) of NO with NH3, an important conversion for the abatement of pollution from lean burn engines. Materials with the CHA and AEI topology types (zeolites SSZ-13 and SSZ-39 and SAPOs-34 and -18, respectively) have been studied for this reaction. Cu²⁺ cations can be introduced into the solids by cation exchange of materials from which the original alkylammonium structure directing agents have been removed by calcination. Apart from requiring a separate preparative step, in SAPOs this can also lead to a reduction in crystallinity and an inhomogeneous distribution of Cu²⁺ cations.

However, copper is easily poisoned and/or deactivated by small amounts of sulfur which are often present in exhaust gases resulting from hydrocarbon combustion, particularly diesel exhaust gas. Accordingly, there remains a need for sulfur tolerate SCR catalysts. This invention satisfies that need amongst others.

DONNY GASAH et al: "Synthesis and Characterization of Zeolite-A and Cu/Ni Zeolite-A for the Direct Conversion of Methane to Liquid Hydrocarbon", Faculty of Chemical and Natural Resources Engineering, 1 May 2008, relates to the synthesis of Cn/Ni-zeolite catalysts, the characterization of such catalysts and their performance in conversion of methane to liquid hydrocarbons.

CN 103 394 369 A relates to a non-noble metal molecular sieve for low concentration gas combustion.

WO 2015/018815 A1 relates to a process for the oxygen free conversion of methane to ethylene on zeolite catalysts.

US 2014/161718 A1 relates to a Cu/SAPO-34 catalytic material for use in the conversion of nitric oxide to nitrogen (using ammonia as a reductant) in synthetic exhaust streams characteristic of diesel engine and other lean-burn vehicle engine exhaust streams.

JP 2014 044720 A discloses a metal-containing Cu-SAPO zeolite which demonstrates improved performance.

JP 2015 062874 A relates to a NOₓ selective reduction catalyst, a method of producing the same, and a method of purifying NOx using the same, and more particularly, reducing nitrogen oxides (NOₓ) with ammonia (NH₃) or a reducing agent capable of producing ammonia or the like.

US 2015/209769 A1 relates to a hydrocarbon trap having improved adsorption of emissions, and more particularly, to a hydrocarbon trap including a high porosity carrier material in the form of a flow-through substrate which allows a large loading of zeolite to provide improved adsorption of hydrocarbons.

Allesandro Turrina et al: "Understanding the structure directing action of copper-polyamine complexes in the direct synthesis of Cu-SAPO-34 and Cu-SAPO-18 catalysts for the selective catalytic reduction of NO with NH3", Microporous and Mesoporous Materials., vol.215, 1 October 2015, pages 154-167, discloses a one-pot synthesis route to Cu-SAPO-34, reported previously with triethylenetetramine (TETA) and tetraethylenepentamine (TEPA), that has been extended to the Cu-polyamine SDAs diethylenetriamine (DETA), N-(2-hydroxyethyl)ethylenediamine (HEEDA) and pentaethylenehexamine (PEHA).

The scientific article by Ashok K. et al. "Impact of different forms of feed sulfur on small-pore Cu-zeolite SCR catalyst", Catalysis Today 231 (2014)75-82, investigates the interaction of Cu-zeolite catalysts with SO2 during NH3-SCR.

The scientific article by Wusirika R. et al "Extruded zeolite catalysts for lean exhaust application", SAE 2005-01-1118, discuses metallic and bi-metallic catalysts during SCR with hydrocarbon reductants.

### SUMMARY OF THE INVENTION

Applicants have discovered that a bi-metal molecular sieve catalyst promoted with nickel in combination with copper unexpectedly improves the catalyst's resistance to sulfur poisoning and deactivation while simultaneously achieving a consistently high level of NOₓ conversion at low temperatures. Due to nickel's strong affinity for sulfur, particularly in lean (i.e., oxygen abundant) exhaust gases, it is surprising and unexpected to find that nickel can be beneficially used in a high sulfur environment or as a means of mitigating sulfur poisoning. Moreover, nickel promoted catalysts generally have poor NOₓ conversion performance at low temperatures. The consistently high NOₓ conversion performance of the present nickel-containing small pore molecular sieve catalyst is, therefore, also surprising.

Applicants have also discovered a novel synthesis route to incorporating both nickel and copper into a small pore molecular sieve. Typically, post synthesis exchange of two transition metals into a molecular sieve results in many complications. If co-impregnation of both metals is used, either through ion exchange or incipient wetness, metal solubilities often lead to a lack of uniformity of the two metals throughout the molecular sieve crystals. For sequential exchange, the competition between metals to exchange can often lead to one metal blocking access to exchange sites from the other metal. The inventors have found that incorporating both metals during molecular sieve synthesis can be achieved without destabilizing the molecular sieve during formation.

The invention is defined in the appended claims 1 and 2. Preferred embodiments are defined in the appended dependent claims.

According to a first aspect of the present invention, there is provided a method for treating an exhaust gas comprising contacting a gas comprising NOx and ammonia reductant with a catalyst to catalytically reduce at least a portion of the NOx to N₂, the catalyst composition comprising a molecular sieve having a small pore framework having a maximum framework ring size of 8 tetrahedral units, 0.5 - 5 weight percent of a transition metal (T_{M}) which is copper, based on the total weight of the molecular sieve, and 0.5 - 5 weight percent nickel, based on the total weight of the molecular sieve, wherein the transition metal and nickel are present in a T_{M}:Ni ratio of about 10:1 to about 1:2, and wherein a majority of the transition metal and nickel are present as extra framework metals, wherein the extra framework metals reside within the molecular sieve and/or on at least a portion of the molecular sieve surface.

According to a further aspect of the present invention, there is provided a system for treating an exhaust gas comprising a catalyst article and a source of ammonia reductant, the catalyst article comprising a substrate coated with a catalyst composition comprising a molecular sieve having a small pore framework having a maximum framework ring size of 8 tetrahedral units, 0.5 - 5 weight percent of a transition metal (T_{M}) which is copper, based on the total weight of the molecular sieve, and 0.5-5 weight percent nickel, based on the total weight of the molecular sieve, wherein the transition metal and nickel are present in a T_{M}:Ni weight ratio of about 10:1 to about 1:2,_and wherein a majority of the transition metal and nickel are present as extra framework metals, wherein the extra framework metals reside within the molecular sieve and/or on at least a portion of the molecular sieve surface.

### BRIEF DESCRIPTION OF THE DRAWINGS

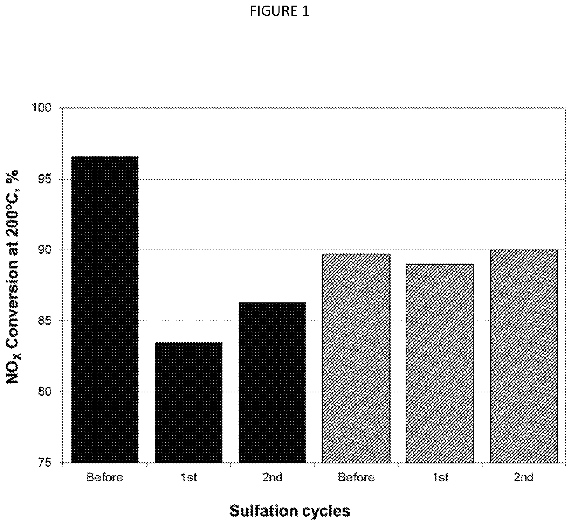

FIGURE 1 is graphical depiction of comparative data showing the NOx conversion performance of the catalyst of present invention relative to a conventional catalyst.

### DETAILED DESCRIPTION OF PREFERRED EMBODIMENTS OF THE INVENTION

The invention, at least in part, is directed to a method for improving environmental air quality, and in particular for treating exhaust gas emissions generated by power plants, gas turbines, lean burn internal combustion engines, and the like. Exhaust gas emissions are improved, at least in part, by reducing NOₓ concentrations using catalysts that require infrequent regenerations.

The catalyst composition employed in the present invention includes a small pore molecular sieve having both nickel and at least one other metal, which is copper, dispersed on and/or within the molecular sieve as extra-framework metal.

Examples of suitable molecular sieves include aluminosilicates (zeolites), silicoaluminophosphates (SAPOs), aluminophosphates (AIPOs), and the like. Examples of preferred molecular sieves include zeolites and SAPOs having a small pore framework (i.e., having a maximum framework ring size of 8 tetrahedral units). Examples of small pore molecular sieves include those having a Framework Type Code selected from the group consisting of: ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG and ZON. Particularly preferred frameworks include AEI, AFT, AFX, CHA, DDR, RHO, MER, LTA, UFI, RTH, SAV, PAU, LEV, ERI, and KFI, with SAV, CHA and AEI being particularly preferred. In a preferred embodiment, one or more of the small pore molecular sieves may comprise a CHA Framework Type Code selected from SAPO-34, AlPO-34, SAPO-47, ZYT-6, CAL-1, SAPO-40, SSZ-62 or SSZ-13, an SAV framework selected from SAPO-STA-7, and/or an AEI Framework Type Code of selected from AIPO-18, SAPO-18, SIZ-8, or SSZ-39. Useful mixed phase molecular sieves include AEI/CHA-mixed phase composition, such as a disordered AEI/CHA framework or an AEI/CHA intergrowth. The ratio of each framework type in the mixed phase molecular sieve is not particularly limited. For example, the ratio of AEI/CHA may range from about 5/95 to about 95/5, preferably about 60/40 to 40/60. In an exemplary embodiment, the ratio of AEI/CHA may range from about 5/95 to about 40/60. It will be appreciated that molecular sieves having a specific Framework Type Code include the all isotypic framework materials defined by that Framework Type Code.

As used herein the term "zeolite" means a synthetic aluminosilicate molecular sieve having a framework constructed of alumina and silica (i.e., repeating SiO₄ and AlO₄ tetrahedral units), and preferably having a molar silica-to-alumina ratio (SAR) of at least 10. Thus the term "zeolites" as used in the present invention do not include silica-aluminophosphates (SAPOs) and thus do not have an appreciable amount of phosphorous in their framework. That is, the zeolite frameworks do not have phosphorous as a regular repeating unit and/or do not have an amount of phosphorous that would affect the basic physical and/or chemical properties of the material, particularly with respect to the material's capacity to selectively reduce NOₓ over a broad temperature range. In certain embodiments, the amount of framework phosphorous is less than 0.1 weight percent, preferably less than 0.01 or less than 0.001 weight percent, based on the total weight of the zeolite.

Zeolites, as used herein, are free or substantially free of framework metals, other than aluminum. Thus, a "zeolite" is distinct from a "metal-substituted zeolite" (also referred to as "isomorphous substituted zeolite"), wherein the latter comprises a framework that contains one or more non-aluminum metals substituted into the zeolite's framework.

Preferred zeolites have a mole silica to alumina ratio (SAR) of less than about 50 and/or at least 10, more preferably about 10 to about 30, for example about 10 to about 25, from about 15 to about 20, from about 20 to about 30, or from about 5 to about 10. The silica-to-alumina ratio of zeolites may be determined by conventional analysis. This ratio is meant to represent, as closely as possible, the ratio in the rigid atomic framework of the zeolite crystal and to exclude silicon or aluminum in the binder or in cationic or other form within the channels. Since it may be difficult to directly measure the silica to alumina ratio of zeolite after it has been combined with a binder material, particularly an alumina binder, these silica-to-alumina ratios are expressed in terms of the SAR of the zeolite per se, i.e., prior to the combination of the zeolite with the other catalyst components.

The bi-metal small pore molecular sieve catalysts employed in the present invention comprise nickel and at least one additional metal, which is copper, wherein both the nickel and at least one additional metal are present as extra-framework metals. As used herein, an "extra-framework metal" is one that resides within the molecular sieve and/or on at least a portion of the molecular sieve surface (preferably at an acid site on the molecular sieve), does not include aluminum, and does not include atoms constituting the framework of the molecular sieve. The nickel and at least one additional metal simultaneous and synergistically resists deactivation by sulfur and also facilitates the treatment of exhaust gases, such as exhaust gas from a diesel engine, including processes such as NOₓ reduction, NH₃ oxidation, and NOₓ storage.

Further preferred metals to be paired with nickel (in addition to copper) include transition metals such as , iron, zinc, tungsten, molybdenum, cobalt, titanium, zirconium, manganese, chromium, vanadium, niobium, as well as tin, bismuth, and antimony.

Other metals that may be used in combination with nickel and copper include platinum group metals, such as ruthenium, rhodium, palladium, indium, platinum; precious metals such as gold and silver; and/or lanthanide metals such as cerium. Preferred transition metals are base metals, such as iron. Preferred metals for storing NOₓ and selective reduction of NOₓ in exhaust gas include Cu and Fe. Particularly useful metals for oxidizing CO, hydrocarbons, and/or ammonia are Pt and Pd. Combinations of nickel and copper are particularly suited as extra-framework metals on molecular sieves, including those having a CHA or AEI framework.

In certain embodiments, the catalyst composition further comprises at least one alkali or alkaline earth metal, wherein the alkali or alkaline earth metal(s) are disposed on or within the molecular sieve material. The alkali or alkaline earth metal can be selected from sodium, potassium, rubidium, cesium, magnesium, calcium, strontium, barium, or some combination thereof. As used here, the phrase "alkali or alkaline earth metal" does not mean the alkali metals and alkaline earth metals are used in the alternative, but instead that one or more alkali metals can be used alone or in combination with one or more alkaline earth metals and that one or more alkaline earth metals can be used alone or in combination with one or more alkali metals. In certain embodiments, alkali metals are preferred. In certain embodiments, alkaline earth metals are preferred. Preferred alkali or alkaline earth metals include calcium, potassium, and combinations thereof. In certain embodiments, the catalyst composition is essentially free of magnesium and/or barium. In certain embodiments, the catalyst is essentially free of any alkali or alkaline earth metal except calcium and potassium. In certain embodiments, the catalyst is essentially free of any alkali or alkaline earth metal except calcium. As used herein, the term "essentially free" with respect to metal means that the material does not have an appreciable amount of the particular metal. That is, the particular metal is not present in amount that would affect the basic physical and/or chemical properties of the material, particularly with respect to the material's capacity to selectively reduce or store NOₓ.

For some applications, the catalyst composition employed in the present invention is free or essentially free of platinum group metals and precious metals. For some applications, the catalyst composition is free or essentially free of alkali metals. For some applications, the catalyst composition is free or essentially free of alkaline earth metals. For some applications, the catalyst composition is free or essentially free of transition metals except aluminum, nickel, copper, and iron. For some applications, the catalyst composition is free or essentially free of platinum group metals, precious metals, alkali and alkaline earth metals, lanthanum group metals, and transition metals except aluminum, nickel, and copper.

In certain embodiments, the total amount of non-aluminum transition metal present as extra-framework in the bi-metal molecular sieve ranges from about 0.1 to about 15 weight percent (wt%) based on the total weight of the molecular sieve, for example from about 2 wt% to about 10 wt%, about 4 to about 8 wt%, about 1 to about 5 wt%, or about 5 wt% to about 7 wt%. For embodiments which utilize copper, iron, or the combination thereof, the concentration of these transition metals in the molecular sieve material is preferably about 1 to about 5 weight percent, more preferably about 2.5 to about 3.5 weight percent. According to the invention, the non-aluminum transition metal in the catalyst composition is copper, wherein the copper present at 0.5 - 5 wt% based on the total weight of the molecular sieve.

In certain embodiments, the total extra-framework transition metals (i.e., including nickel) are present in an amount relative to the amount of aluminum in the molecular sieve (such as a zeolite), namely the framework aluminum. As used herein, the transition metal:aluminum (T_{M}:Al) ratio is based on the relative molar amount of promoter metal to molar framework Al in the corresponding zeolite. In certain embodiments, the catalyst material has a T_{M}:Al ratio of about 0.1 to about 1.0, preferably about 0.2 to about 0.5. A T_{M}:Al ratio of about 0.2 to about 0.5 is particularly useful where T_{M} is copper or iron, and more particularly where T_{M} is copper or iron and the SAR of the zeolite is about 15 - 30.

Preferably, incorporation of at least a majority of the Ni and other metals such as Cu into the molecular sieve occurs during synthesis of the molecular sieve. The non-framework transition metal incorporated into the channels and/or cavities of a molecular sieve during its crystallization is referred to herein as *in-situ* metal. In general, the metal containing molecular sieves of the present invention are prepared from a one-pot synthesis admixture. This admixture contains a source of nickel, a source of additional transition metal, in addition to other components such as a source of silica, a source of alumina, a structure directing agent, and the like.

Polyamines, including comprising diethylenetriamine (DETA), N-(2-hydroxyethyl)ethylenediamine (HEEDA), triethylenetetramine (TETA), N,N'-bis(2-aminoethyl)-1,3-propanediamine (232), 1,2-bis(3-aminopropylamino)ethane (323), tetraethylenepentamine (TEPA), pentaethylenehexamine (PEHA), and Tetraammine are useful as chelating agents with Cu2+ and Ni2+ for the synthesis of SAPO-34 and SAPO-18. Other metallo-organic complexes useful for incorporating an extra-framework metal into the molecular sieve include metal-bipyridines, such as Cu bipyridine and Ni bipyridine.

In addition, metal salts can be used as a non-aluminum transition metal source. Examples of useful metal salts including nickel sulfate, copper sulfate, nickel acetate, and copper acetate. When metal salts are used in the reaction admixture, the salts preferably have similar cations, for example, nickel acetate and copper acetate or nickel sulfate and copper sulfate. Suitable silica sources include, without limitation, fumed silica, silicates, precipitated silica, colloidal silica, silica gels, dealuminated zeolites such as dealuminated zeolite Y, and silicon hydroxides and alkoxides. Silica sources resulting in a high relative yield are preferred.

Typical alumina sources also are generally known and include aluminates, alumina, other zeolites, aluminum colloids, boehmites, pseudo-boehmites, aluminum hydroxides, aluminum salts such as aluminum sulfate and alumina chloride, aluminum hydroxides and alkoxides, alumina gels.

Suitable structure directing agents (SDAs) for directing the synthesis of a CHA framework-type material include adamantammonium compounds, such as N,N,N-trimethyl-1-adamantammonium compounds, N,N,N-trimethyl-2-adamantammonium compounds, and N,N,N-trimethylcyclohexylammonium compounds, N,N-dimethyl-3,3-dimethylpiperidinium compounds, N,N-methylethyl-3,3-dimethylpiperidinium compounds, N,N-dimethyl-2-methylpiperidinium compounds, 1,3,3,6,6-pentamethyl-6-azonio-bicyclo(3.2.1)octane compounds, N,N-dimethylcyclohexylamine. Other SDAs include N,N,N-dimethylethylcyclohexylammonium (DMECHA), N,N,N-methyldiethylcyclohexylammonium (MDECHA), N,N,N-triethylcyclohexylammonium (TECHA), 2,7-dimethyl-1-azonium[5,4]decane (DM27AD), N-alkyl-3-quinuclidinol cations such as N-methyl-3-quinuclidinol, and N,N,N-trialkyl-exoaminonorbornane cations. Representative anions include halogen, e.g., fluoride, chloride, bromide and iodide, hydroxide, acetate, sulfate, tetrafluoroborate, carboxylate, and the like. Hydroxide is the most preferred anion.

Examples of suitable templating agents for AEI include N,N-Diethyl-2,6-dimethylpiperidinium cation; N,N-Dimethyl-9-azoniabicyclo 3.3.1nonane; N,N-Dimethyl-2,6-dimethylpiperidinium cation; N-Ethyl-N-methyl-2,6-dimethylpiperidinium cation; N,N-Diethyl-2-ethylpiperidinium cation; N,N-Dimethyl-2-(2-hydroxyethyl)piperidinium cation; N,N-Dimethyl-2-ethylpiperidinium cation; N,N-Dimethyl-3,5-dimethylpiperidinium cation; N-Ethyl-N-methyl-2-ethylpiperidinium cation; 2,6-Dimethyl-1-Azonium 5.4 decane cation; N-Ethyl-N-propyl-2,6-dimethylpiperidinium cation; 2,2,4,6,6-Pentamethyl-2-azoniabicyclo 3.2.1 octane cation; and N,N-Diethyl-2,5-dimethyl-2,5-dihydropyrrolium cation, with N,N-Dimethyl-3,5-dimethylpiperidinium or 1,1-Diethyl-2,6-dimethylpiperidinium being particularly preferred. The anion associated with the cation may be any anion which is not detrimental to the formation of the molecular sieve. Representative anions include halogen, e.g., fluoride, chloride, bromide and iodide, hydroxide, acetate, sulfate, tetrafluoroborate, carboxylate, and the like. Hydroxide is the most preferred anion. In certain embodiments, the reaction mixture and subsequent molecular sieve is free or essentially free of fluorine.

One-pot synthesis is conducted by combining predetermined relative amounts of the admixture components under various mixing and heating regimens as will be readily apparent to those skilled in the art. Reaction temperatures, mixing times and speeds, and other process parameters that are suitable for conventional molecular sieve synthesis techniques are also generally suitable for the present invention. Hydrothermal crystallization is usually conducted under autogenous pressure, at a temperature of about 100 to 200 °C for a duration of several days, such about 1 - 20 days, a preferably about 1 - 3 days.

At the conclusion the crystallization period, the resulting solids are separated from the remaining reaction liquid by standard mechanical separation techniques, such as vacuum filtration. The recovered solids are then rinsed with deionized water, and dried at an elevated temperature (e.g., 75 - 150 °C) for several hours (e.g., about 4 to 24 hours). The drying step can be performed under vacuum or at atmospheric pressure.

The dried molecular sieve crystals are preferably calcined, but can also be used without calcination.

It will be appreciated that the foregoing sequence of steps, as well as each of the above-mentioned periods of time and temperature values are merely exemplary and may be varied.

The foregoing one-pot synthesis procedure permits adjusting the transition metal content of the crystals based on the composition of the starting synthesis mixture. For example, a desired Cu or Ni content can be directed by providing a predetermined relative amount of Cu or Ni source in the synthesis mixture, without requiring post synthesis impregnation or exchange to increase or decrease the metal loading on the material. In certain embodiments, the molecular sieve is free of post-synthesis exchanged metal, including copper, iron, and nickel.

The extra-framework transition metals, i.e. Cu and Ni, are catalytically active and uniformly dispersed within the molecular sieve framework. In certain embodiments, the extra-framework metals are uniformly dispersed if there is little to no bulk accumulation of the metals and/or there is little to no accumulation of the metals on the surface of the molecular sieve crystals. Accordingly, in embodiments, the weight percentage of extra-framework metal in the molecular sieve as measured by (X-ray photoelectron spectroscopy (XPS) is within 15%, more preferably 10%, of the weight percentage of the extra-framework metal in the molecular sieve as measured by either X-ray Fluorescence (XRF) or inductively coupled plasma (ICP) techniques.

In certain embodiments, a uniformly dispersed transition metal means that the molecular sieve contains not more than about 5 weight percent transition metal in the form of a transition metal oxide (e.g., CuO, FeO, Fe₂O₃, Fe₃O₄), also referred to herein as a free transition metal oxide, or a soluble transition metal oxide, relative to the total amount of that transition metal in the molecular sieve. Preferably, the molecular sieve contains a majority of *in-situ* transition metal compared to free transition metal oxides. In certain embodiments, the molecular sieve contains a weight ratio of free transition metal oxides (e.g., CuO) to *in-situ* transition metal (e.g. ionic Cu) of less than about 1, less than about 0.5, less than about 0.1, or less than about 0.01, for example about 1 to about 0.001, about 0.5 to about 0.001, about 0.1 to about 0.001, or about 0.01 to about 0.001.

The molecular sieve catalyst can be used without a post-synthesis metal exchange. However, in certain embodiments, the molecular sieve undergoes a post-synthesis metal exchange. Thus, in certain embodiments, provided is a catalyst comprising a molecular sieve containing one or more catalytic metals exchanged into the channels and/or cavities of the molecular sieve post molecular sieve-synthesis in addition to *in-situ* nickel and copper. According to the present disclosure, examples of metals that can be post-molecular sieve synthesis exchanged or impregnated include transition metals, including copper, nickel, zinc, iron, tungsten, molybdenum, cobalt, titanium, zirconium, manganese, chromium, vanadium, niobium, as well as tin, bismuth, and antimony; noble metals including platinum group metals (PGMs), such as ruthenium, rhodium, palladium, indium, platinum, and precious metals such as gold and silver; alkaline earth metals such as beryllium, magnesium, calcium, strontium, and barium; and rare earth metals such as lanthanum, cerium, praseodymium, neodymium, europium, terbium, erbium, ytterbium, and yttrium. Preferred transition metals for post-synthesis exchange are base metals, and preferred base metals include those selected from the group consisting of manganese, iron, cobalt, nickel, and mixtures thereof. Metals incorporated post-synthesis can be added to the molecular sieve via any known technique such as ion exchange, impregnation, isomorphous substitution, etc. The amount of metal post-synthesis exchanged can be from about 0.1 to about 3 weight percent, for example about 0.1 to about 1 weight percent, based on the total weight of the molecular sieve.

The foregoing one-pot synthesis procedure can result in molecular sieve crystals of uniform size and shape with relatively low amounts of agglomeration. In addition, the synthesis procedure can result in molecular sieve crystals having a mean crystalline size of about 0.1 to about 10 µm, for example about 0.5 to about 5 µm, about 0.1 to about 1 µm, about 1 to about 5 µm, about 3 to about 7 µm, and the like. In certain embodiments, large crystals are milled using a jet mill or other particle-on-particle milling technique to an average size of about 1.0 to about 1.5 micron to facilitate washcoating a slurry containing the catalyst to a substrate, such as a flow-through monolith.

Crystal size is the length of one edge of a face of the crystal. Direct measurement of the crystal size can be performed using microscopy methods, such as SEM and TEM. Other techniques for determining mean particle size, such as laser diffraction and scattering can also be used. In addition to the mean crystal size, catalyst compositions preferably have a majority of the crystal sizes are greater than about 0.1 µm, preferably between about 0.5 and about 5 µm, such as about 0.5 to about 5 µm, about 0.7 to about 5 µm, about 1 to about 5 µm, about 1.5 to about 5.0 µm, about 1.5 to about 4.0 µm, about 2 to about 5 µm, or about 1 µm to about 10 µm.

Catalysts as described herein are particularly applicable for heterogeneous catalytic reaction systems (i.e., solid catalyst in contact with a gas reactant). To improve contact surface area, mechanical stability, and/or fluid flow characteristics, the catalysts is disposed on and/or within a substrate, preferably a porous substrate. In certain embodiments, a washcoat containing the catalyst is applied to an inert substrate, such as corrugated metal plate or a honeycomb cordierite brick. Alternatively, the catalyst is kneaded along with other components such as fillers, binders, and reinforcing agents, into an extrudable paste which is then extruded through a die to form a honeycomb brick. In an aspect of the invention, provided is a catalyst article comprising the bimetal molecular sieve catalyst described herein coated on substrate, as defined in appended claim 2.

Certain aspects of the disclosure provide a catalytic washcoat. The washcoat comprising the bi-metal molecular sieve catalyst described herein is preferably a solution, suspension, or slurry. Suitable coatings include surface coatings, coatings that penetrate a portion of the substrate, coatings that permeate the substrate, or some combination thereof.

A washcoat can also include non-catalytic components, such as fillers, binders, stabilizers, rheology modifiers, and other additives, including one or more of alumina, silica, non-zeolite silica alumina, titania, zirconia, ceria. In certain embodiments, the catalyst composition may comprise pore-forming agents such as graphite, cellulose, starch, polyacrylate, and polyethylene, and the like. These additional components do not necessarily catalyze the desired reaction, but instead improve the catalytic material's effectiveness, for example, by increasing its operating temperature range, increasing contact surface area of the catalyst, increasing adherence of the catalyst to a substrate, etc. In preferred embodiments, the washcoat loading is >18.3 g/L (>0.3 g/in³), such as >73.2 g/L (>1.2 g/in³), >91.5 g/L (>1.5 g/in³), >103.7 g/L (>1.7 g/in³) or >122.1 g/L (>2.00 g/in³), and preferably <213.6 g/L (< 3.5 g/in³), such as <152.6 g/L (< 2.5 g/in³). In certain embodiments, the washcoat is applied to a substrate in a loading of about 48.8 g/L to 61.1 g/L (0.8 to 1.0 g/in³), 61.1 g/L to 91.5 g/L (1.0 to 1.5 g/in³), or 91.5 g/L to 152.6 g/L (1.5 to 2.5 g/in³).

Two of the most common substrate designs are plate and honeycomb. Preferred substrates, particularly for mobile applications, include flow-through monoliths having a so-called honeycomb geometry that comprise multiple adjacent, parallel channels that are open on both ends and generally extend from the inlet face to the outlet face of the substrate and result in a high-surface area-to-volume ratio. For certain applications, the honeycomb flow-through monolith preferably has a high cell density, for example about 93 to 124 cells per square centimeter (600 to 800 cells per square inch), and/or an average internal wall thickness of about 0.18 - 0.35 mm, preferably about 0.20 - 0.25 mm. For certain other applications, the honeycomb flow-through monolith preferably has a low cell density of about 23 to 93 cells per square centimeter (150 - 600 cells per square inch), more preferably about 31 to 62 cells per square centimeter (200 - 400 cells per square inch). Preferably, the honeycomb monoliths are porous. In addition to cordierite, silicon carbide, silicon nitride, ceramic, and metal, other materials that can be used for the substrate include aluminum nitride, silicon nitride, aluminum titanate, α-alumina, mullite, e.g., acicular mullite, pollucite, a thermet such as Al₂OsZFe, Al₂O_{3/}Ni or B₄CZFe, or composites comprising segments of any two or more thereof. Preferred materials include cordierite, silicon carbide, and alumina titanate.

Plate-type catalysts have lower pressure drops and are less susceptible to plugging and fouling than the honeycomb types, which is advantageous in high efficiency stationary applications, but plate configurations can be much larger and more expensive. A Honeycomb configuration is typically smaller than a plate type, which is an advantage in mobile applications, but has higher pressure drops and plug more easily. In certain embodiments the plate substrate is constructed of metal, preferably corrugated metal.

In certain embodiments, the invention comprises a catalyst article made by a process described herein. In a particular embodiment, the catalyst article is produced by a process that includes the steps of applying a bi-metal molecular sieve catalyst composition, preferably as a washcoat, to a substrate as a layer either before or after at least one additional layer of another composition for treating exhaust gas has been applied to the substrate. The one or more catalyst layers on the substrate, including the bi-metal molecular sieve catalyst layer, are arranged in consecutive layers. As used herein, the term "consecutive" with respect to catalyst layers on a substrate means that each layer is contact with its adjacent layer(s) and that the catalyst layers as a whole are arranged one on top of another on the substrate.

In certain embodiments, the bi-metal molecular sieve catalyst is disposed on the substrate as a first layer and another composition, such as an oxidation catalyst, reduction catalyst, scavenging component, or NOₓ storage component, is disposed on the substrate as a second layer. In other embodiments, the bi-metal molecular sieve catalyst is disposed on the substrate as a second layer and another composition, such as such as an oxidation catalyst, reduction catalyst, scavenging component, or NOₓ storage component, is disposed on the substrate as a first layer. As used herein the terms "first layer" and "second layer" are used to describe the relative positions of catalyst layers in the catalyst article with respect to the normal direction of exhaust gas flow-through, past, and/or over the catalyst article. Under normal exhaust gas flow conditions, exhaust gas contacts the first layer prior to contacting the second layer. In certain embodiments, the second layer is applied to an inert substrate as a bottom layer and the first layer is top layer that is applied over the second layer as a consecutive series of sub-layers. In such embodiments, the exhaust gas penetrates (and hence contacts) the first layer, before contacting the second layer, and subsequently returns through the first layer to exit the catalyst component. In other embodiments, the first layer is a first zone disposed on an upstream portion of the substrate and the second layer is disposed on the substrate as a second zone, wherein the second zone is downstream of the first.

In another embodiment, the catalyst article is produced by a process that includes the steps of applying a bi-metal molecular sieve catalyst composition, preferably as a washcoat, to a substrate as a first zone, and subsequently applying at least one additional composition for treating an exhaust gas to the substrate as a second zone, wherein at least a portion of the first zone is downstream of the second zone. Alternatively, the bi-metal molecular sieve catalyst composition can be applied to the substrate in a second zone that is downstream of a first zone containing the additional composition. Examples of additional compositions include oxidation catalysts, reduction catalysts, scavenging components (e.g., for sulfur, water, etc.), or NOₓ storage components.

To reduce the amount of space required for an exhaust system, individual exhaust components in certain embodiments are designed to perform more than one function. For example, applying an SCR catalyst to a wall-flow filter substrate instead of a flow-through substrate serves to reduce the overall size of an exhaust treatment system by allowing one substrate to serve two functions, namely catalytically reducing NOₓ concentration in the exhaust gas and mechanically removing soot from the exhaust gas. Accordingly, in certain embodiments, the substrate is a honeycomb wall-flow filter or partial filter. Wall-flow filters are similar to flow-through honeycomb substrates in that they contain a plurality of adjacent, parallel channels. However, the channels of flow-through honeycomb substrates are open at both ends, whereas the channels of wall-flow substrates have one end capped, wherein the capping occurs on opposite ends of adjacent channels in an alternating pattern. Capping alternating ends of channels prevents the gas entering the inlet face of the substrate from flowing straight through the channel and existing. Instead, the exhaust gas enters the front of the substrate and travels into about half of the channels where it is forced through the channel walls prior to entering the second half of the channels and exiting the back face of the substrate.

The substrate wall has a porosity and pore size that is gas permeable, but traps a major portion of the particulate matter, such as soot, from the gas as the gas passes through the wall. Preferred wall-flow substrates are high efficiency filters. Wall flow filters for use with the present invention preferably have an efficiency of least 70%, at least about 75%, at least about 80%, or at least about 90%. In certain embodiments, the efficiency will be from about 75 to about 99%, about 75 to about 90%, about 80 to about 90%, or about 85 to about 95%. Here, efficiency is relative to soot and other similarly sized particles and to particulate concentrations typically found in conventional diesel exhaust gas. For example, particulates in diesel exhaust can range in size from 0.05 microns to 2.5 microns. Thus, the efficiency can be based on this range or a sub-range, such as 0.1 to 0.25 microns, 0.25 to 1.25 microns, or 1.25 to 2.5 microns.

Porosity is a measure of the percentage of void space in a porous substrate and is related to backpressure in an exhaust system: generally, the lower the porosity, the higher the backpressure. Preferably, the porous substrate has a porosity of about 30 to about 80%, for example about 40 to about 75%, about 40 to about 65%, or from about 50 to about 60%.

The pore interconnectivity, measured as a percentage of the substrate's total void volume, is the degree to which pores, void, and/or channels, are joined to form continuous paths through a porous substrate, i.e., from the inlet face to the outlet face. In contrast to pore interconnectivity is the sum of closed pore volume and the volume of pores that have a conduit to only one of the surfaces of the substrate. Preferably, the porous substrate has a pore interconnectivity volume of at least about 30%, more preferably at least about 40%.

The mean pore size of the porous substrate is also important for filtration. Mean pore size can be determined by any acceptable means, including by mercury porosimetry. The mean pore size of the porous substrate should be of a high enough value to promote low backpressure, while providing an adequate efficiency by either the substrate per se, by promotion of a soot cake layer on the surface of the substrate, or combination of both. Preferred porous substrates have a mean pore size of about 10 to about 40 µm, for example about 20 to about 30 µm, about 10 to about 25 µm, about 10 to about 20 µm, about 20 to about 25 µm, about 10 to about 15 µm, and about 15 to about 20 µm.

In general, the production of an extruded solid body containing the bi-metal molecular sieve catalyst involves blending the bi-metal molecular sieve catalyst, a binder, an optional organic viscosity-enhancing compound into an homogeneous paste which is then added to a binder/matrix component or a precursor thereof and optionally one or more of stabilized ceria, and inorganic fibers. The blend is compacted in a mixing or kneading apparatus or an extruder. The mixtures have organic additives such as binders, pore formers, plasticizers, surfactants, lubricants, dispersants as processing aids to enhance wetting and therefore produce a uniform batch. The resulting plastic material is then molded, in particular using an extrusion press or an extruder including an extrusion die, and the resulting moldings are dried and calcined. The organic additives are "burnt out" during calcinations of the extruded solid body. A bi-metal molecular sieve catalyst may also be washcoated or otherwise applied to the extruded solid body as one or more sub-layers that reside on the surface or penetrate wholly or partly into the extruded solid body.

Extruded solid bodies containing bi-metal molecular sieve catalysts generally comprise a unitary structure in the form of a honeycomb having uniform-sized and parallel channels extending from a first end to a second end thereof. Channel walls defining the channels are porous. Typically, an external "skin" surrounds a plurality of the channels of the extruded solid body. The extruded solid body can be formed from any desired cross section, such as circular, square or oval. Individual channels in the plurality of channels can be square, triangular, hexagonal, circular etc. Channels at a first, upstream end can be blocked, e.g. with a suitable ceramic cement, and channels not blocked at the first, upstream end can also be blocked at a second, downstream end to form a wall-flow filter. Typically, the arrangement of the blocked channels at the first, upstream end resembles a checker-board with a similar arrangement of blocked and open downstream channel ends.

The binder/matrix component is preferably selected from the group consisting of cordierite, nitrides, carbides, borides, intermetallics, lithium aluminosilicate, a spinel, an optionally doped alumina, a silica source, titania, zirconia, titania-zirconia, zircon and mixtures of any two or more thereof. The paste can optionally contain reinforcing inorganic fibers selected from the group consisting of carbon fibers, glass fibers, metal fibers, boron fibers, alumina fibers, silica fibers, silica-alumina fibers, silicon carbide fibers, potassium titanate fibers, aluminum borate fibers and ceramic fibers.

The alumina binder/matrix component is preferably gamma alumina, but can be any other transition alumina, i.e., alpha alumina, beta alumina, chi alumina, eta alumina, rho alumina, kappa alumina, theta alumina, delta alumina, lanthanum beta alumina and mixtures of any two or more such transition aluminas. It is preferred that the alumina is doped with at least one non-aluminum element to increase the thermal stability of the alumina. Suitable alumina dopants include silicon, zirconium, barium, lanthanides and mixtures of any two or more thereof. Suitable lanthanide dopants include La, Ce, Nd, Pr, Gd and mixtures of any two or more thereof.

Sources of silica can include a silica sol, quartz, fused or amorphous silica, sodium silicate, an amorphous aluminosilicate, an alkoxysilane, a silicone resin binder such as methylphenyl silicone resin, a clay, talc or a mixture of any two or more thereof. Of this list, the silica can be SiO₂ as such, feldspar, mullite, silica-alumina, silica-magnesia, silica-zirconia, silica-thoria, silica-berylia, silica-titania, ternary silica-alumina-zirconia, ternary silica-alumina-magnesia, ternary-silica-magnesia-zirconia, ternary silica-alumina-thoria and mixtures of any two or more thereof.

Preferably, the bi-metal molecular sieve catalyst is dispersed throughout, and preferably evenly throughout, the entire extruded catalyst body.

Where any of the above extruded solid bodies are made into a wall-flow filter, the porosity of the wall-flow filter can be from 30-80%, such as from 40-70%. Porosity and pore volume and pore radius can be measured e.g. using mercury intrusion porosimetry.

The bi-metal molecular sieve catalyst described herein can promote the reaction of a reductant, i.e. ammonia, with nitrogen oxides to selectively form elemental nitrogen (N₂) and water (H₂O). Thus, the catalyst can be formulated to favor the reduction of nitrogen oxides with a reductant (i.e., an SCR catalyst). Examples of such reductants include hydrocarbons (e.g., C3 - C6 hydrocarbons) and nitrogenous reductants such as ammonia and ammonia hydrazine or any suitable ammonia precursor, such as urea ((NH₂)₂CO), ammonium carbonate, ammonium carbamate, ammonium hydrogen carbonate or ammonium formate. According to the present invention the reductant is ammonia.

The bi-metal molecular sieve catalyst described herein can also promote the oxidation of ammonia. Thus, in another embodiment, the catalyst can be formulated to favor the oxidation of ammonia with oxygen, particularly a concentrations of ammonia typically encountered downstream of an SCR catalyst (e.g., ammonia oxidation (AMOX) catalyst, such as an ammonia slip catalyst (ASC)). In certain embodiments, the bi-metal molecular sieve catalyst is disposed as a top layer over an oxidative under-layer, wherein the under-layer comprises a platinum group metal (PGM) catalyst or a non-PGM catalyst. Preferably, the catalyst component in the underlayer is disposed on a high surface area support, including but not limited to alumina.

In yet another embodiment, an SCR and AMOX operations are performed in series, wherein both processes utilize a catalyst comprising the bi-metal molecular sieve catalyst described herein, and wherein the SCR process occurs upstream of the AMOX process. For example, an SCR formulation of the catalyst can be disposed on the inlet side of a filter and an AMOX formulation of the catalyst can be disposed on the outlet side of the filter.

Accordingly, provided in the present disclosure is a method for the reduction of NOₓ compounds or oxidation of NH₃ in a gas, which comprises contacting the gas with a catalyst composition described herein for the catalytic reduction of NOₓ compounds for a time sufficient to reduce the level of NOₓ compounds and/or NH₃ in the gas. In certain embodiments, provided is a catalyst article having an ammonia slip catalyst disposed downstream of a selective catalytic reduction (SCR) catalyst. In such embodiments, the ammonia slip catalyst oxidizes at least a portion of any nitrogenous reductant that is not consumed by the selective catalytic reduction process. For example, in certain embodiments, the ammonia slip catalyst is disposed on the outlet side of a wall flow filter and an SCR catalyst is disposed on the upstream side of a filter. In certain other embodiments, the ammonia slip catalyst is disposed on the downstream end of a flow-through substrate and an SCR catalyst is disposed on the upstream end of the flow-through substrate. In other embodiments, the ammonia slip catalyst and SCR catalyst are disposed on separate bricks within the exhaust system. These separate bricks can be adjacent to, and in contact with, each other or separated by a specific distance, provided that they are in fluid communication with each other and provided that the SCR catalyst brick is disposed upstream of the ammonia slip catalyst brick.

In certain embodiments, the SCR and/or AMOX process is performed at a temperature of at least 100 °C. In another embodiment, the process(es) occur at a temperature from about 150 °C to about 750 °C. In a particular embodiment, the temperature range is from about 175 to about 550 °C. In another embodiment, the temperature range is from 175 to 400 °C. In yet another embodiment, the temperature range is 450 to 900 °C, preferably 500 to 750 °C, 500 to 650 °C, 450 to 550 °C, or 650 to 850 °C. Embodiments utilizing temperatures greater than 450 °C are particularly useful for treating exhaust gases from a heavy and light duty diesel engine that is equipped with an exhaust system comprising (optionally catalyzed) diesel particulate filters which are regenerated actively, e.g. by injecting hydrocarbon into the exhaust system upstream of the filter, wherein the molecular sieve catalyst for use in the present invention is located downstream of the filter.

According to another aspect, provided in the present disclosure is a method for the reduction of NOₓ compounds and/or oxidation of NH₃ in a gas, which comprises contacting the gas with a catalyst described herein for a time sufficient to reduce the level of NOₓ compounds in the gas. Methods of the present invention may comprise one or more of the following steps: (a) accumulating and/or combusting soot that is in contact with the inlet of a catalytic filter; (b) introducing a nitrogenous reducing agent into the exhaust gas stream prior to contacting the catalytic filter, preferably with no intervening catalytic steps involving the treatment of NOₓ and the reductant; (c) generating NH₃ over a NOₓ adsorber catalyst or lean NOₓ trap, and preferably using such NH₃ as a reductant in a downstream SCR reaction; (d) contacting the exhaust gas stream with a DOC to oxidize hydrocarbon based soluble organic fraction (SOF) and/or carbon monoxide into CO₂, and/or oxidize NO into NOz, which in turn, may be used to oxidize particulate matter in particulate filter; and/or reduce the particulate matter (PM) in the exhaust gas; (e) contacting the exhaust gas with one or more flow-through SCR catalyst device(s) in the presence of a reducing agent to reduce the NOx concentration in the exhaust gas; and (f) contacting the exhaust gas with an ammonia slip catalyst, preferably downstream of the SCR catalyst to oxidize most, if not all, of the ammonia prior to emitting the exhaust gas into the atmosphere or passing the exhaust gas through a recirculation loop prior to exhaust gas entering/re-entering the engine.

In another embodiment, all or at least a portion of the nitrogen-based reductant, i.e. NH₃, for consumption in the SCR process can be supplied by a NOₓ adsorber catalyst (NAC), a lean NOₓ trap (LNT), or a NOₓ storage/reduction catalyst (NSRC), disposed upstream of the SCR catalyst, e.g., a SCR catalyst of the present invention disposed on a wall-flow filter. NAC components useful in the present invention include a catalyst combination of a basic material (such as alkali metal, alkaline earth metal or a rare earth metal, including oxides of alkali metals, oxides of alkaline earth metals, and combinations thereof), and a precious metal (such as platinum), and optionally a reduction catalyst component, such as rhodium. Specific types of basic material useful in the NAC include cesium oxide, potassium oxide, magnesium oxide, sodium oxide, calcium oxide, strontium oxide, barium oxide, and combinations thereof. The precious metal is preferably present at about 0.35 g/L to about 7 g/L (about 10 to about 200 g/ft³), such as 0.7 g/L to 2 g/L (20 to 60 g/ft³). Alternatively, the precious metal of the catalyst is characterized by the average concentration which may be from about 1.4 g/L to about 3.5 g/L (about 40 to about 100 grams/ft³).

Under certain conditions, during the periodically rich regeneration events, NH₃ may be generated over a NOₓ adsorber catalyst. The SCR catalyst downstream of the NOₓ adsorber catalyst may improve the overall system NOₓ reduction efficiency. In the combined system, the SCR catalyst is capable of storing the released NH₃ from the NAC catalyst during rich regeneration events and utilizes the stored NH₃ to selectively reduce some or all of the NOₓ that slips through the NAC catalyst during the normal lean operation conditions.

The method for treating exhaust gas as described herein can be performed on an exhaust gas derived from a combustion process, such as from an internal combustion engine (whether mobile or stationary), a gas turbine and coal or oil fired power plants. The method may also be used to treat gas from industrial processes such as refining, from refinery heaters and boilers, furnaces, the chemical processing industry, coke ovens, municipal waste plants and incinerators, etc. In a particular embodiment, the method is used for treating exhaust gas from a vehicular lean burn internal combustion engine, such as a diesel engine, a lean-burn gasoline engine or an engine powered by liquid petroleum gas or natural gas.

In certain aspects, the invention is a system for treating exhaust gas generated by combustion process, such as from an internal combustion engine (whether mobile or stationary), a gas turbine, coal or oil fired power plants, and the like. Such systems include a catalytic article comprising the bi-metal molecular sieve catalyst described herein and at least one additional component for treating the exhaust gas, wherein the catalytic article and at least one additional component are designed to function as a coherent unit.

In certain embodiments, the system comprises a catalytic article comprising a bi-metal molecular sieve catalyst described herein, a conduit for directing a flowing exhaust gas, a source of ammonia reductant disposed upstream of the catalytic article. The system can include a controller for the metering the ammonia reductant into the flowing exhaust gas only when it is determined that the molecular sieve catalyst is capable of catalyzing NOₓ reduction at or above a desired efficiency, such as at above 100 ºC, above 150 ºC or above 175 ºC. The metering of the ammonia reductant can be arranged such that 60% to 200% of theoretical ammonia is present in exhaust gas entering the SCR catalyst calculated at 1:1 NH₃/NO and 4:3 NH₃/NO₂.

In another embodiment, the system may comprise an oxidation catalyst (e.g., a diesel oxidation catalyst (DOC)) for oxidizing nitrogen monoxide in the exhaust gas to nitrogen dioxide can be located upstream of a point of metering the nitrogenous reductant into the exhaust gas. In one embodiment, the oxidation catalyst is adapted to yield a gas stream entering the SCR molecular sieve catalyst having a ratio of NO to NO₂ of from about 4:1 to about 1:3 by volume, e.g. at an exhaust gas temperature at oxidation catalyst inlet of 250 °C to 450 °C. The oxidation catalyst can include at least one platinum group metal (or some combination of these), such as platinum, palladium, or rhodium, coated on a flow-through monolith substrate. In one embodiment, the at least one platinum group metal is platinum, palladium or a combination of both platinum and palladium. The platinum group metal can be supported on a high surface area washcoat component such as alumina, a zeolite such as an aluminosilicate zeolite, silica, non-zeolite silica alumina, ceria, zirconia, titania or a mixed or composite oxide containing both ceria and zirconia.

In a further embodiment, a suitable filter substrate may be located between the oxidation catalyst and the SCR catalyst. Filter substrates can be selected from any of those mentioned above, e.g. wall flow filters. Where the filter is catalyzed, e.g. with an oxidation catalyst of the kind discussed above, preferably the point of metering nitrogenous reductant is located between the filter and the molecular sieve catalyst. Alternatively, if the filter is un-catalyzed, the means for metering nitrogenous reductant can be located between the oxidation catalyst and the filter.

The catalysts described herein are less susceptible to sulfur poisoning compared to conventional catalysts. The catalyst's ability to maintain good catalytic activity when exposed to high levels of sulfur allows the catalyst to undergo less frequent regenerations to remove sulfur contaminants. Less frequent catalyst regenerations allow for more stable catalyst functionality and improved fuel economy. Conventional zeolite-based catalyst, such as copper zeolites, typically require regeneration, e.g., at elevated temperatures above 500 ºC, before sulfur contaminants reach 0.5 g per liter of catalysts. The bi-metal catalysts described herein can forego regeneration until sulfur concentrations on the catalyst are greater than 0.5 g / L of catalyst. Accordingly, in one aspect, the disclosure pertains to a method for regenerating an exhaust gas treatment catalyst comprising contacting the bi-metal catalyst with an exhaust gas stream containing sulfur, and regenerating the bi-metal catalyst when the sulfur concentration on the catalyst is > 0.5 g sulfur / L of catalyst, for example, > 0.75 g sulfur / L of catalyst, > 1.0 g sulfur / L of catalyst, or > 1.5 g sulfur / L of catalyst.

In addition, the bi-metal catalyst is ideally suited to treat exhaust gas generated by combusting high sulfur ("dirty") fuel. Clean fuels, such as methane, typically have a sulfur content less than 0.5 ppm. Low sulfur gasoline typically has a sulfur content of about 5 ppm. Higher sulfur fuels can have a sulfur content of greater than 10 ppm sulfur, for example, 50 ppm or 100 ppm. Accordingly, in an embodiment, the invention pertains to a method for treating exhaust gas comprising containing the bi-metal catalyst with an exhaust gas stream containing > 10 ppm sulfur, for example > 25 ppm sulfur, > 50 ppm sulfur, > 75 ppm sulfur, or > 100 ppm sulfur.

### EXAMPLES

### Prophetic Examples 1-8:

A series of polyamines comprising diethylenetriamine (DETA), N-(2-hydroxyethyl)ethylenediamine (HEEDA), triethylenetetramine (TETA), N,N'-bis(2-aminoethyl)-1,3-propanediamine (232), 1,2-bis(3-aminopropylamino)ethane (323), tetraethylenepentamine (TEPA), pentaethylenehexamine (PEHA), will be used as chelating agents with both Cu2+ and Ni2+ for the synthesis of SAPO-34 or SAPO-18. In a typical preparation, fumed silica will be added to an aluminophosphate gel prepared by mixing Al(OH)3·H2O (Aldrich, technical grade) with H3PO4 (BDH, 85%) in water, followed by addition of the copper or nickel complex, pre-prepared by adding copper acetate or nickel acetate to an aqueous solution of the polyamine. A portion of the total water content will be set aside for this purpose. Finally an excess of the same polyamine (so that the polyamine / M2+ ratio was 4/1) will be added dropwise to adjust the gel pH to 7. Cu-SAPO-18 will be prepared adopting specific conditions. Cu2+-N,N'-bis(2-aminoethyl)-1,3-propanediamine (232) will be been used as the SDA while tetraethylammonium hydroxide (TEAOH), will be added dropwise to adjust the gel pH to 7. The overall gel composition is AI(OH)3 : 0.61 H3PO4 : 0.2 SiO2 : 40 H2O : 0.05 Cu-232 : 0.27 TEAOH. Seeds of STA-7, 1% weight in respect to the SiO2 content, will be added to promote the nucleation of pure SAPO-18, because the two structures have a crystal plane in common. Details are given in Table 1

The final gels will be stirred continuously at room temperature until homogeneous, prior to being transferred to a Teflon-lined stainless steel autoclave and heated at 190 °C for 6 days. The resultant products will be suspended in water and sonicated to force separation of crystalline from fine grained amorphous solid, which was removed by decanting. Then, the crystalline materials will be collected by filtration, washed with deionized H2O, and dried in air at 80 °C for 12 hours.

**TABLE 1**

| Example No. | Polyamine | Metal | Co-base | Product (by XRD) |
|---|---|---|---|---|
| 1 | DETA | Cu2+ / Ni2+ | DETA | SAPO-34 |
| 2 | HEEDA | Cu2+ / Ni2+ | HEEDA | SAPO-34 |
| 3 | TETA | Cu2+ / Ni2+ | TETA | SAPO-34/SAPO-18 |
| 4 | 232 | Cu2+ / Ni2+ | 232 | SAPO-18 |
| 5 | 232 | Cu2+ / Ni2+ | TEAOH | AEI/CHA intergrowth |
| 6 | 323 | Cu2+ / Ni2+ | 323 | SAPO-34 |
| 7 | TEPA | Cu2+ / Ni2+ | TEPA | AEI/CHA intergrowth |
| 8 | PEHA | Cu2+ / Ni2+ | PEHA | AEI/CHA intergrowth |

### Example 9:

Powder samples of Cu-CHA (4.5 wt%Cu) and Cu,Ni-CHA (3.6 wt%Cu, 3.31wt%Ni) were prepared both with metal present during the synthesis process. Samples were evaluated for NOx conversion at a space velocity of 30,000 h⁻¹, an ammonia to NOx ratio of 1, and in NO only conditions before sulfation and twice after sulfation. The Cu-CHA sample (Figure 1, solid bars) shows the highest initial NOx conversion, but drops 13% at 200 °C after exposure to 20 ppm of SO₂ for 35 min at 250 °C. The Cu,Ni (Figure 1, cross hatched bars) shows less than a 1% change over the sulfation and desulfation process. This stability should enable systems with less frequent regenerations.

## Claims

1. A method for treating an exhaust gas comprising contacting a gas comprising NOx and ammonia reductant with a catalyst to catalytically reduce at least a portion of the NOx to N₂, the catalyst composition comprising a molecular sieve having a small pore framework having a maximum framework ring size of 8 tetrahedral units, 0.5 - 5 weight percent of a transition metal (T_{M}) which is copper, based on the total weight of the molecular sieve, and 0.5 - 5 weight percent nickel, based on the total weight of the molecular sieve, wherein the transition metal and nickel are present in a T_{M}:Ni ratio of about 10:1 to about 1:2, and wherein a majority of the transition metal and nickel are present as extra framework metals, wherein the extra framework metals reside within the molecular sieve and/or on at least a portion of the molecular sieve surface.

2. A system for treating an exhaust gas comprising a catalyst article and a source of ammonia reductant, the catalyst article comprising a substrate coated with a catalyst composition comprising a molecular sieve having a small pore framework having a maximum framework ring size of 8 tetrahedral units, 0.5 - 5 weight percent of a transition metal (T_{M}) which is copper, based on the total weight of the molecular sieve, and 0.5 - 5 weight percent nickel, based on the total weight of the molecular sieve, wherein the transition metal and nickel are present in a T_{M}:Ni weight ratio of about 10:1 to about 1:2, and wherein a majority of the transition metal and nickel are present as extra framework metals, wherein the extra framework metals reside within the molecular sieve and/or on at least a portion of the molecular sieve surface.

3. The method of claim 1 or the system of claim 2, wherein the molecular sieve is composed of crystals, and wherein the transition metal and the nickel are present in a weight percentage as measured by XPS that is within 10% of their weight percentage as measured by XRF.

4. The method of claim 1 or the system of claim 2, wherein the molecular sieve has a CHA framework.

5. The method of claim 1 or the system of claim 2, wherein the molecular sieve has an AEI framework.

## Patentansprüche

1. Verfahren zum Behandeln eines Abgases, umfassend ein Inkontaktbringen eines Gases, umfassend NOx und Ammoniak-Reduktionsmittel, mit einem Katalysator, um mindestens einen Anteil des NOx bis N₂ katalytisch zu reduzieren, die Katalysatorzusammensetzung umfassend ein Molekularsieb, das einen kleinen Porenrahmen aufweist, der eine maximale Rahmenringgröße von 8 tetraedrischen Einheiten aufweist, zu 0,5-5 Gewichtsprozent ein Übergangsmetall (T_{M}), das Kupfer ist, basierend auf dem Gesamtgewicht des Molekularsiebs, und zu 0,5-5 Gewichtsprozent Nickel, basierend auf dem Gesamtgewicht des Molekularsiebs, wobei das Übergangsmetall und Nickel in einem T_{M} : Ni-Verhältnis von etwa 10 : 1 bis etwa 1 : 2 vorhanden sind, und wobei ein Großteil des Übergangsmetalls und Nickels als zusätzliche Rahmenmetalle vorhanden sind, wobei die zusätzlichen Rahmenmetalle innerhalb des Molekularsiebs und/oder auf mindestens einem Anteil der Molekularsieboberfläche liegen.

2. System zum Behandeln eines Abgases, umfassend einen Katalysatorartikel und eine Quelle von Ammoniak-Reduktionsmittel, der Katalysatorartikel umfassend ein Substrat, das mit einer Katalysatorzusammensetzung beschichtet ist, umfassend ein Molekularsieb, das einen kleinen Porenrahmen aufweist, der eine maximale Rahmenringgröße von 8 tetraedrischen Einheiten aufweist, zu 0,5-5 Gewichtsprozent ein Übergangsmetall (T_{M}), das Kupfer ist, basierend auf dem Gesamtgewicht des Molekularsiebs, und zu 0,5-5 Gewichtsprozent Nickel, basierend auf dem Gesamtgewicht des Molekularsiebs, wobei das Übergangsmetall und Nickel in einem T_{M} : Ni-Verhältnis von etwa 10 : 1 bis etwa 1 : 2 vorhanden sind, und wobei ein Großteil des Übergangsmetalls und Nickels als zusätzliche Rahmenmetalle vorhanden sind, wobei die zusätzlichen Rahmenmetalle innerhalb des Molekularsiebs und/oder auf mindestens einem Anteil der Molekularsieboberfläche liegen.

3. Verfahren nach Anspruch 1 oder System nach Anspruch 2, wobei das Molekularsieb aus Kristallen zusammengesetzt ist und wobei das Übergangsmetall und das Nickel in einem Gewichtsprozentsatz, gemessen durch XPS, vorhanden sind, der innerhalb von 10 % ihres Gewichtsprozentsatzes, gemessen durch XRF, liegt.

4. Verfahren nach Anspruch 1 oder System nach Anspruch 2, wobei das Molekularsieb einen CHA-Rahmen aufweist.

5. Verfahren nach Anspruch 1 oder System nach Anspruch 2, wobei das Molekularsieb einen AEI-Rahmen aufweist.

## Revendications

1. Procédé de traitement d'un gaz d'échappement comprenant la mise en contact d'un gaz comprenant des NOx et d'un réducteur d'ammoniac avec un catalyseur pour réduire de manière catalytique au moins une partie des NOx en N₂, la composition de catalyseur comprenant un tamis moléculaire ayant une structure à pores fins ayant une dimension annulaire maximale de structure de 8 unités tétraédriques, 0,5 à 5 pour cent en poids d'un métal de transition (T_{M}) qui est du cuivre, sur la base du poids total du tamis moléculaire, et de 0,5 à 5 pour cent en poids de nickel, sur la base du poids total du tamis moléculaire, dans lequel le métal de transition et le nickel sont présents dans un rapport T_{M}:Ni d'environ 10:1 à environ 1:2, et dans lequel une majorité du métal de transition et du nickel sont présents en tant que métaux de structure supplémentaires, dans lequel les métaux de structure supplémentaires se trouvent au sein du tamis moléculaire et/ou sur au moins une partie de la surface de tamis moléculaire.

2. Système de traitement d'un gaz d'échappement comprenant un article catalyseur et une source de réducteur d'ammoniac, l'article catalyseur comprenant un substrat revêtu d'une composition de catalyseur comprenant un tamis moléculaire ayant une structure à pores fin ayant une dimension annulaire maximale de structure de 8 motifs tétraédriques, 0,5 à 5 pour cent en poids d'un métal de transition (T_{M}) qui est du cuivre, sur la base du poids total du tamis moléculaire, et de 0,5 à 5 pour cent en poids de nickel, sur la base du poids total du tamis moléculaire, dans lequel le métal de transition et le nickel sont présents dans un rapport en poids T_{M}:Ni d'environ 10:1 à environ 1:2, et dans lequel une majorité du métal de transition et du nickel sont présents en tant que métaux de structure supplémentaires, dans lequel les métaux de structure supplémentaires se trouvent au sein du tamis moléculaire et/ou sur au moins une partie de la surface de tamis moléculaire.

3. Procédé selon la revendication 1 ou système selon la revendication 2, dans lequel le tamis moléculaire est composé de cristaux, et dans lequel le métal de transition et le nickel sont présents dans un pourcentage en poids tel que mesuré par XPS qui est inférieur à 10 % de leur pourcentage en poids tel que mesuré par XRF.

4. Procédé selon la revendication 1 ou système selon la revendication 2, dans lequel le tamis moléculaire a une structure CHA.

5. Procédé selon la revendication 1 ou système selon la revendication 2, dans lequel le tamis moléculaire a une structure AEI.
